**Europäisches Patentamt**

**European Patent Office**

**Office européen des brevets**

(11) Numéro de publication: **0 270 388 B1**

# FASCICULE DE BREVET EUROPEEN

(45) Date de publication du fascicule du brevet:
18.07.90

(51) Int. Cl.⁵: **B62M 3/00**

(21) Numéro de dépôt: 87402211.4

(22) Date de dépôt: 06.10.87

(54) **Manivelle pour pédalier de bicyclette.**

(30) Priorité: 31.10.86 FR 8615180
06.05.87 FR 8706374

(43) Date de publication de la demande:
08.06.88 Bulletin 88/23

(45) Mention de la délivrance du brevet:
18.07.90 Bulletin 90/29

(84) Etats contractants désignés:
AT BE CH DE ES FR IT LI LU NL

(56) Documents cités:
EP-A- 0 127 553
FR-A- 417 313
FR-A- 981 379
FR-A- 990 700
US-A- 2 350 468

(73) Titulaire: Sté. Look, Rue de la Pique, F-58000 Nevers(FR)

(72) Inventeur: Sté. Look, Rue de la Pique,
F-58000 Nevers(FR)

(74) Mandataire: Tony-Durand, Serge, Cabinet
Tony-Durand 77, rue Boissière, F-75116 Paris(FR)

## Description

La présente invention concerne les manivelles pour pédalier de bicyclette.

Actuellement ces manivelles sont fabriquées d'une seule pièce en métal, en l'occurrence en un alliage métallique léger. Cependant du fait même que ces manivelles sont amenées à transmettre des efforts importants, elles doivent être convenablement dimensionnées. Dans ces conditions, bien qu'elles soient fabriquées en alliage métallique léger, leur poids reste relativement important, ce qui constitue en handicap pour l'équipement de vélos de course.

Dans le but de réduire le poids des cadres de bicyclette, il a déjà été proposé de réaliser ceux-ci, non plus avec des tubes métalliques, mais avec des éléments tubulaires fabriqués en une résine synthétique renforcée par une matière textile: voir EP 127 553. Cependant une solution de ce genre ne peut pas être adoptée pour les manivelles de pédalier en raison des problèmes particuliers soulevés par la nécessité de monter une pédale pivotante sur l'une des extrémités d'une manivelle et l'axe rotatif du pédalier sur l'autre extrémité.

Par ailleurs le FR 417 313 décrit une manivelle de pédalier qui, au lieu d'être formée d'une seule pièce forgée, est constituée par plusieurs pièces distinctes fabriquées par estampage et ensuite soudées ensemble. Ainsi cette manivelle comprend un bras de manivelle consistant un élément tubulaire, une première pièce d'extrémité formant le moyen de la manivelle et une seconde pièce d'extrémité destinée à servir de pièce de réception de l'axe de la pédale correspondante.

Toutefois cette solution ne permet aucune réduction de poids car les pièces constitutives de la manivelle correspondante sont toutes en tôles estampées, inclus le bras de manivelle et ces pièces sont solidarisées ensemble par soudure.

Quant au brevet US 2 350 468, il concerne une manivelle de pédalier constituée par un élément tubulaire en métal léger, dans les extrémités duquel sont disposées des pièces d'extrémité. A cet effet, cet élément tubulaire est formé par l'assemblage de deux pièces complémentaires en forme de coquilles qui sont emboîtées l'une dans l'autre. Cependant là encore cette solution ne permet pas une réduction notable du poids de l'ensemble.

C'est pourquoi la présente invention a pour but de réaliser une manivelle conçue pour présenter une résistance mécanique équivalente à celle des manivelles actuelles, tout en possédant un poids beaucoup plus réduit.

A cet effet la présente invention a pour objet une manivelle pour pédalier de bicyclette qui est constituée par l'assemblage de trois éléments distincts, à savoir:

– un bras de manivelle consistant en un élément tubulaire,
– une première pièce d'extrémité, par exemple en métal, formant le moyen de cette manivelle, et qui est fixée par des moyens de fixation sur l'extrémité correspondante de l'élément formant le bras de la manivelle,

– et une seconde pièce d'extrémité qui est fixée sur ou dans l'extrémité opposée de l'élément tubulaire pour servir de pièce de réception de l'axe de la pédale correspondante (FR-A 417 313), caractérisée en ce que l'élément tubulaire est fabriqué en matériau composite par surmoulage d'une résine synthétique sur une âme tubulaire en fibres de renforcement, par exemple fibres de carbone ou fibres en aramide, ou est constitué par deux pièces complémentaires fixées côte à côte chacune, qui sont fabriquées en un matériau composite constitué par des fibres et une résine d'imprégnation.

Ainsi, comme le bras de la présente manivelle est réalisé en un matériau synthétique composite, le poids de celle-ci subit une réduction de poids très importante tout en conservant une résistance mécanique excellente. Un exemple de réalisation de la présente manivelle est décrit ci-après en référence au dessin annexé à simple titre indicatif, et sur lequel:

La figure 1 est une vue en perspective de cette manivelle.

La figure 2 en est une vue en coupe axiale.

La figure 3 est une vue en élévation de la pièce d'extrémité destinée à recevoir la pédale correspondante,

La figure 4 est une vue partielle en coupe d'une variante de réalisation de cette même pièce d'extrémité.

La figure 5 est une vue en coupe-élévation d'une autre variante.

La figure 6 est une vue en plan de dessus de la pièce d'extrémité selon cette dernière variante.

Les figures 7, 8 et 9 sont des vues partielles en coupe verticale de trois variantes de réalisation de la pièce d'extrémité ou de renfort destinée à recevoir la pédale correspondante.

La figure 10 est une vue schématique en perspective d'une autre forme de réalisation du bras proprement dit de la manivelle selon l'invention.

La figure 11 est une vue en élévation de face d'une manivelle selon l'invention.

La figure 12 en est une vue en élévation de côté.

La figure 13 est une vue en perspective des trois éléments dont l'assemblage constitue cette manivelle.

La figure 14 est une vue en élévation de la pièce d'extrémité formant le moyeu de la manivelle.

La figure 15 en est une vue en coupe selon la ligne XV–XV de la figure 4.

La figure 16 est une vue partielle en coupe à l'endroit de la jonction entre cette pièce d'extrémité et le bras de manivelle.

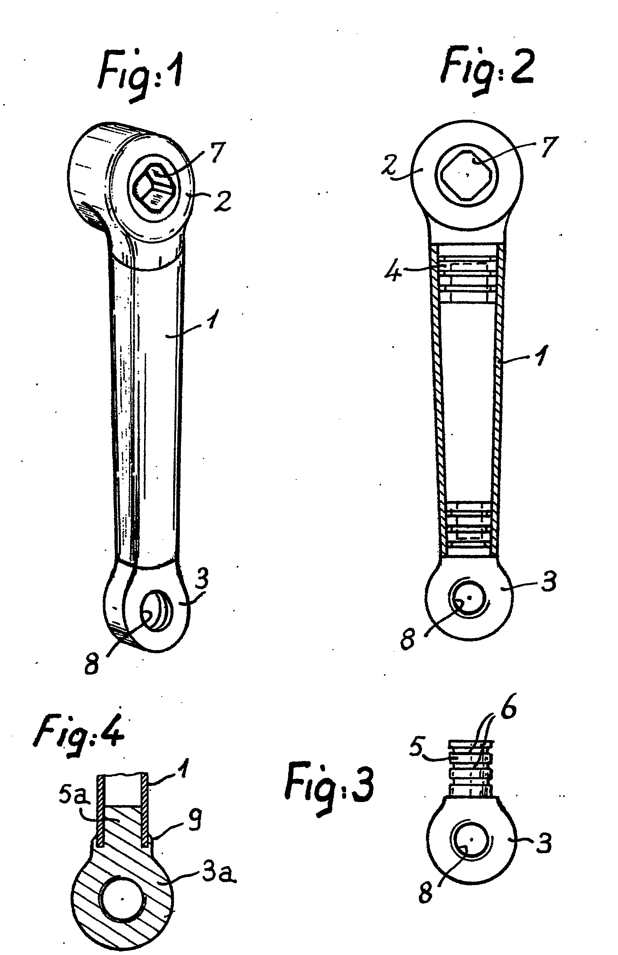

La manivelle représentée sur les figures 1 à 6 est constituée par l'assemblage de trois éléments distincts, à savoir: un élément tubulaire 1 constituant le bras de cette manivelle et deux pièces d'extrémité 2 et 3 formant respectivement le moyeu de celle-ci et un embout destiné à recevoir la pédale correspondante.

L'élément tubulaire 1 est fabriqué en un matériau synthétique composite par surmoulage d'une résine synthétique sur une ame tubulaire en fibres de renforcement, par exemple en fibres de carbone ou fibres en aramide, telles que celles connues sous la marque "Kevlar"®. L'épaisseur des parois de cet élément tubulaire et l'orientation des fibres de renforcement de celui-ci sont déterminées de façon à obtenir une résistance mécanique aussi grande que celle des manivelles classiques en alliage métallique léger. Cependant du fait même que cet élément tubulaire est réalisé en matériau synthétique composite, il présente un poids beaucoup plus réduit.

Les deux pièces d'extrémité 2 et 3 sont fabriquées indépendamment en métal, ou autre matériau approprié. Chacune d'elle comporte un tenon 4 ou 5 apte à être engagé et fixé à l'intérieur de l'extrémité correspondante de l'élément tubulaire 1. A cet effet, chacun de ces tenons présente une série de gorges transversales 6 destinées à servir de logements à une colle appropriée susceptible d'assurer la fixation en place du tenon correspondant.

Dans le cas d'une pédale gauche la pièce d'extrémité 2, formant le moyeu de la manivelle, présente la forme représentée aux figures 1 et 2. Elle comporte donc simplement une ouverture transversale 7 pour son emmanchement sur l'extrémité correspondante de l'axe d'un pédalier. Par contre, s'il s'agit d'une manivelle droite, cette pièce d'extrémité 2 est capable de recevoir le ou les plateaux dentés correspondants, ou des bras radiaux destinés à servir de supports à une ou plusieurs couronnes dentées.

Quant à la pièce d'extrémité 3, elle constitué un simple embout d'extrémité presentant un trou taraudé 8 destiné à recevoir l'axe de la manivelle correspondante.

Comme il a déjà été mentionné, le principal avantage de la présente manivelle réside dans la réduction de son poids par rapport aux manivelles actuelles. Cependant, un autre avantage consiste dans le fait que la structure de cette manivelle permet de réaliser aisément des manivelles de longueurs différentes à partir de pièce d'extrémité 2 et 3, toutes identiques entre elles. En effet, il suffit de fabriquer plusieurs éléments tubulaires 1 de longueurs différentes.

Cependant la manivelle selon l'invention peut faire l'objet de diverses autres formes de réalisation. Ainsi la figure 4 illustre une variante d'exécution de la pièce d'extrémité destinée à recevoir la pédale correspondante. Dans cette variante, cette pièce 3a comporte un collet 9 destiné à entourer l'extrémité correspondante de l'élément tubulaire 1 constituant le bras de la manivelle. Cependant cette pièce comporte comme précédemment un tenon 5a susceptible d'être enfoncé à l'intérieur de l'extrémité correspondante de cet élément tubulaire. La présence du collet 9 reforce la solidité de l'ensemble et évite un délaminage de l'élément tubulaire 1. Par ailleurs, ce collet facilite le centrage lors du montage et il protège ensuite la colle de fixation contre les effets de l'humidité. Bien entendu, le collet 9 peut également être prévu sur la première pièce d'extrémité 2 constituant le moyeu de la manivelle.

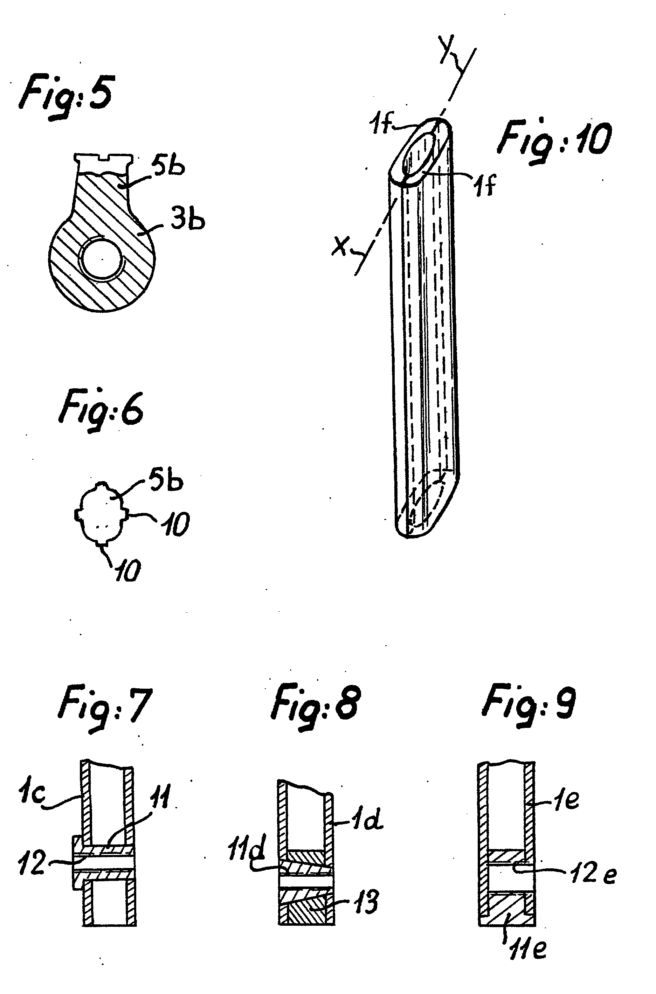

Les figures 5 et 6 représentent une autre variante de la pièce d'extrémité destinée à recevoir la pédale correspondante. Dans cette variante, cette pièce 3b comporte un tenon 5b de profil conique. Cependant l'extrémité de ce tenon porte des dents 10 destinées à assurer le centrage lors du montage. Par ailleurs, ces dents ont pour fonction d'uniformiser l'épaisseur de la couche de colle de fixation.

La figure 7 représente une autre variante encore dans laquelle la pièce d'extrémité, destinée à recevoir la pédale correspondante, est remplacée par un insert métallique 11 incorporé dans l'extrémité correspondante de l'élément tubulaire 1c formant le bras de manivelle. Cet insert métallique est disposé transversalement et il comporte un canal axial taraudé 12 destiné à recevoir l'axe de fixation de la pédale.

La figure 8 représente une variante de cette forme de réalisation. Dans celle-ci il existe également un insert métallique 11d dans l'extrémité correspondante du bras 1d de la manivelle. Cependant il est en plus prévu un renfort 13 en matériau composite à l'intérieur de l'extrémité correspondante de cet élément tubulaire.

La figure 9 représente une autre variante de réalisation dans laquelle la pièce de réception de la manivelle est constituée par une sorte de bouchon métallique 11e de renforcement qui est enfoncé à l'intérieur de l'extrémité correspondante de l'élément tubulaire 1e formant bras de manivelle. Ce bouchon métallique comporte un canal transversal 12e taraudé qui débouche sur l'un des côtés du bras de la manivelle pour pouvoir recevoir l'axe de la pédale correspondante.

Par ailleurs la figure 10 représente une variante de réalisation de l'élément tubulaire formant le bras de la manivelle. Dans cette variante, cet élément est constitué par deux pièces complémentaires 1f qui sont fabriquées séparément puis assemblées l'une contre l'autre suivant un plan de joint XY. Sur leur face interne, ces pièces présentent chacune une gorge. Ces pièces sont fabriquées en un matériau composite constitué par des fibres tressées ou non et une résine d'imprégnation appropriée. Bien entendu, le bras de manivelle ainsi constitué reçoit ensuite des pièces d'extrémité ou de renfort destinées respectivement à constituer le moyeu de la manivelle et à servir d'élément de réception et de fixation pour la pédale correspondante.

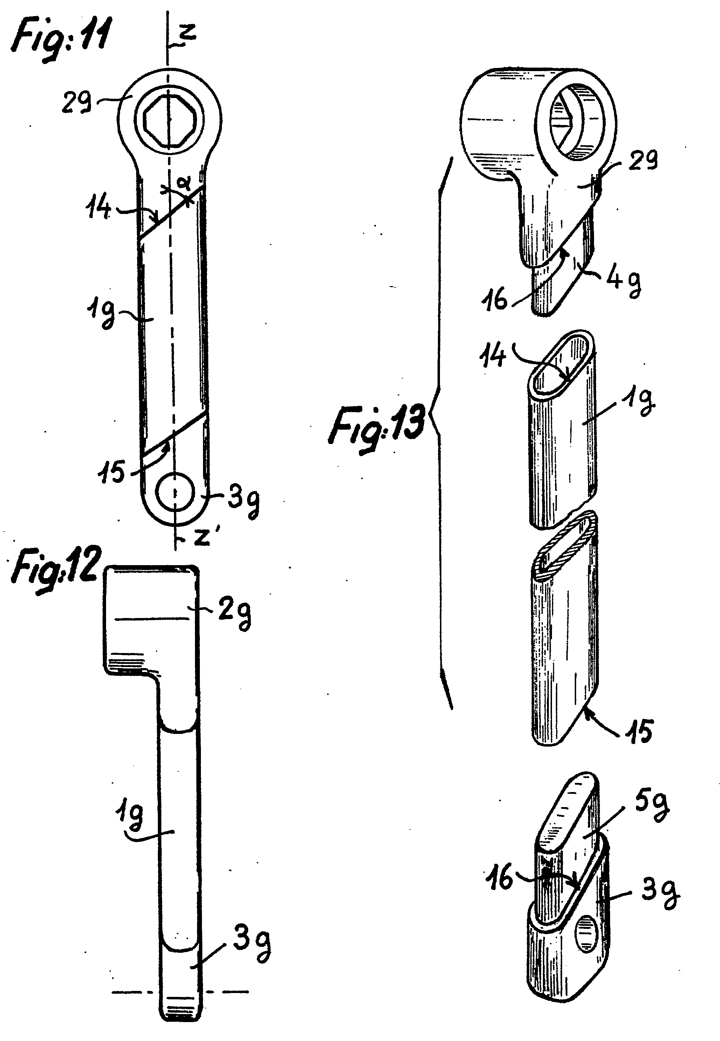

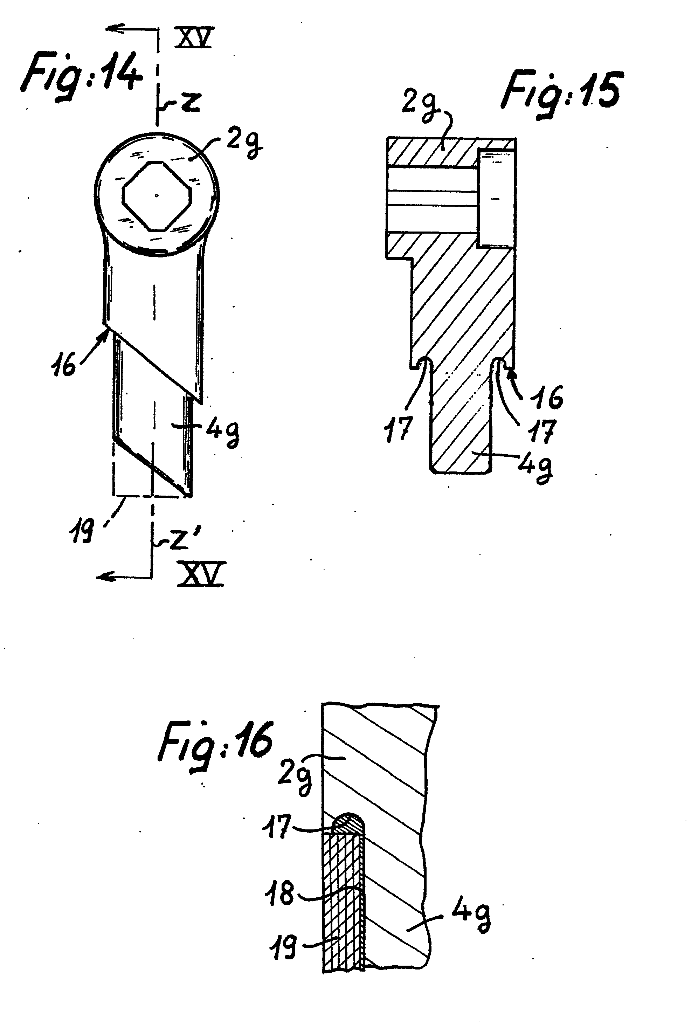

Les figures 11 à 16 respresentent une autre forme de réalisation encore de la manivelle selon l'invention. Dans celle-ci le bras de manivelle est également fabriqué en un matériau synthétique composite par surmoulage d'une résine synthétique sur une ame tubulaire en fibres de renforcement, par exemple en fibres de carbone ou fibres en aramide, telles que celles connues sous la marque "Kevlar". De préférence, cet élément présente une section ovale.

Dans cette forme de réalisation particulière, les extrémités de cet élément tubulaire 1g s'étendent en biais par rapport à l'axe Z-Z' de celui-ci. En effet, chaque extrémité 14 ou 15 de cet élément forme un angle $\alpha$, par exemple de 45°, par rapport à l'axe Z-Z'.

Le bras de manivelle 1g porte deux pièces d'extrémité 2g et 3g dont la première forme le moyeu de la manivelle cependant que la seconde est destinée à recevoir l'axe d'une pédale. Ces deux pièces sont fabriquées indépendamment en métal ou autre matériau approprié. Chacune d'elle comporte un tenon 4g ou 5g apte à être engagé et fixé à l'intérieur de l'extrémité correspondante de l'élément tubulaire 1g.

A la base de chacune de ces tenons de fixation 4g ou 5g, chaque pièce d'extrémité 2g ou 3g comporte un épaulement 16 qui s'étend en biais par rapport à l'axe Z-Z' du bras de manivelle, selon le même angle d'inclinaison que les extrémités 14 et 15 de ce bras. Ainsi, chacun de ces épaulements s'applique en contact étroit contre l'extrémité correspondante 14 ou 15 de l'élément tubulaire 2g lorsque le tenon de fixation de chaque pièce d'extrémité est engagé dans l'extrémité correspondante de cet élément tubulaire.

L'extrémité libre de chaque tenon 4g ou 5g peut s'étendre en biais par rapport à l'axe Z-Z', comme représenté à la figure 4 pour le tenon 4g. Ceci correspond à une surface constante de collage entre chaque tenon et l'extrémité correspondante du bras de manivelle 1g. Cependant l'extrémité libre de chaque tenon peut également s'étendre à angle droit par rapport à l'axe Z-Z' comme représenté par le trait mixte 19 sur la figure 4. Eventuellement la première de ces deux formes (extrémité en biais) peut être prévue sur le tenon 5g de la pièce d'extrémité destinée à recevoir la pédale, et l'autre forme (extrémité à angle droit) sur le tenon 4g de l'autre pièce d'extrémité.

La disposition en biais des surfaces de contact, entre chaque extrémité de l'élément tubulaire 1g et l'épaulement d'appui de la pièce d'extrémité correspondante , a pour effet d'augmenter la section de ces surfaces et par suite la résistance des liaisons correspondantes. Ainsi, avec un angle d'inclinaison de 45°, les surfaces de contact peuvent être d'environ le double de celles existant dans le cas d'une coupe à angle droit des extrémités de l'élément tubulaire 1g. Quant au moment d'inertie, par rapport au petit axe de la section ovale de l'élément tubulaire 1g, il peut être quatre fois plus élevé que dans un tel cas.

Pour renforcer encore la liaison entre l'élément tubulaire 2g et les deux pièces d'extrémité, il peut être avantageusement prévu une gorge 17 dans la partie de chaque épaulement 16 qui est attenante à la surface externe du tenon correspondant de fixation 4g ou 5g (voir figures 5 et 6). Cette gorge a pour avantage de supprimer tout risque d'amorce de rupture à l'endroit du raccordement entre le tenon de fixation et le corps même de la pièce d'extrémité correspondante.

Cependant cette gorge a également l'avantage d'éviter le suintage, à l'extérieur, de la colle utilisée pour la fixation du tenon de chaque pièce d'extrémité à l'intérieur de l'élément tubulaire 1g. En effet, si le film de colle 18, existant entre un tenon de fixation et la paroi intérieure de l'élément tubulaire 1g, présente un excès, celui-ci peut venir se loger dans la gorge 17 correspondante. Ceci évite donc effectivement tout risque de suintage à l'extérieur.

Cependant la présente manivelle peut donner lieu à différentes autres variantes de réalisation, les exemples d'exécution décrits précédemment n'ayant été fournis qu'à simple titre indicatif.

## Revendications

1. Manivelle pour pédalier de bicyclette qui est constituée par l'assemblage de trois éléments distincts, à savoir:
   - un bras de manivelle consistant en un élément tubulaire (1),
   - une première pièce d'extrémité, par exemple en métal, formant le moyeu (2) de cette manivelle, et qui est fixée par des moyens de fixation sur l'extrémité correspondante de l'élémetn (1) formant le bras de la manivelle,
   - et une seconde pièce d'extrémité (3, 3a, 3b, 11, 11d, 11e) qui est fixée sur ou dans l'extrémité opposée de l'élément tubulaire (1) pour servir de pièce de réception de l'axe de la pédale correspondante, caractérisée en ce que l'élément tubulaire (1) est fabriqué en matériau composite par surmoulage d'une résine synthétique sur une âme tubulaire en fibres de renforcement, par exemple fibres de carbone ou fibres en aramide, ou est constitué par deux pièces complémentaires (1f) fixées côte à côte chacune, qui sont fabriquées en un matériau composite constitué par des fibres et une résine d'imprégnation.

2. Manivelle selon la revendication 1, caractérisé en ce que les deux pièces d'extrémité (2, 3 ou 3a, 3b) portent chacune un tenon (4 ou 5, 5a, 5b) aptes à être emboités à l'intérieur de l'extrémité correspondante de l'élément tubulaire (1) et à y être fixé par collage ou tout autre moyen approprié.

3. Manivelle selon la revendication 1, caractérisée en ce que la seconde pièce d'extrémité, destinée à recevoir l'axe de la pédale correspondante, consiste en un insert (11, 11d) incorporé dans l'extrémité correspondante de l'élément tubulaire (1), ou en un bouchon (11e) susceptible d'être emboité dans cette extrémité, cette pièce comportant un canal transversal (12, 12e) débouchant à l'extérieur pour pouvoir recevoir l'axe de la pédale.

4. Manivelle pour pédalier de bicyclette, selon les revendications 1 et 2, caractérisée en ce que les extrémités (14, 15) du bras de manivelle (1g) s'étendent en biais par rapport à l'axe (Z–Z') de celui-ci et, à la base du tenon de fixation (4g, 5g) destiné à être engagé à l'intérieur de l'élément tubulaire (1), chaque pièce d'extrémité (2g, 3g) comporte un épaulement (16) qui s'étend également en biais par rapport à l'axe de ce tenon selon le même angle d'inclinaison (α) que l'extrémité correspondante de l'élément tubulaire (1) contre laquelle cet épaulement est ainsi adapté à s'appliquer.

5. Manivelle selon la revendication 4, caractérisée en ce qu'une gorge 17 est prévue à l'endroit de chaque épaulement (16) d'une pièce d'extrémité (2g ou 3g) et ce, du côté attenant au tenon de fixation (4g ou 5g) de cette pièce d'extrémité.

## Patentansprüche

1. Fahrrad-Tretkurbel, bestehend aus der Verbindung dreier unterschiedlicher Elemente, nämlich

– einem Kurbelarm bestehend aus einem rohrförmigen Element (1),
– einem ersten Endstück, z.B. aus Metall, das die Nabe (2) dieser Kurbel bildet und das durch Befestigungsmittel am entsprechenden Ende des den Kurbelarm bildenden Elements (1) befestigt ist,
– und einem zweiten Endstück (3, 3a, 3b, 11, 11d, 11e), das am oder im gegenüberliegenden Ende des rohrförmigen Elements (1) befestigt ist, um als Aufnahmeteil für die Achse des entsprechenden Pedals zu dienen,
dadurch gekennzeichnet, daß das rohrförmige Element (1) aus einem Verbundmaterial gefertigt ist durch Abformen eines Kunstharzes auf einem rohrförmigen Kern aus Verstärkungsfasern, z.B. Kohlenstoff- bzw. Carbonfasern oder Fasern aus Aramid, oder aus zwei komplementären, jeweils nebeneinander befestigten Teilen (If) besteht, die aus einem Verbundmaterial aus Fasern und einem Imprägnierharz gefertigt sind.

2. Kurbel nach Anspruch 1, dadurch gekennzeichnet, daß die beiden Endstücke (2, 3 oder 3a, 3b) jeweils einen Zapfen (4 oder 5, 5a, 5b) tragen, der in das Innere des entsprechenden Endes des rohrförmigen Elements (1) einpaßbar und dort durch Verkleben oder ein beliebiges anderes geeignetes Mittel befestigbar ist.

3. Kurbel nach Anspruch 1, dadurch gekennzeichnet, daß das zweite Endstück, das zur Aufnahme der Achse des entsprechenden Pedals bestimmt ist, aus einem Einsatz (11, 11d) besteht, der im entsprechenden Ende des rohrförmigen Elements (1) aufgenommen ist, oder aus einem Pfropfen (11e), der in dieses Ende einpaßbar ist, wobei dieses Stück einen Querkanal (12, 12e) umfaßt, der nach außen offen ist, um die Achse des Pedals aufzunehmen.

4. Fahrrad-Tretkurbel nach den Ansprüchen 1 und 2, dadurch gekennzeichnet, daß die Enden (14, 15) des Kurbelarmes (1g) sich bezüglich dessen Achse (Z - Z') schräg erstrecken und an der Basis des Befestigungszapfens (4g, 5g), der zum Einführen in das Innere des rohrförmigen Elements (1) bestimmt ist, jedes Endstück (2g, 3g) eine Schulter (16) umfaßt, die sich gleichfalls bezüglich der Achse dieses Zapfens mit demselben Neigungswinkel (α) wie das entsprechende Ende des rohrförmigen Elements (1) schräg erstreckt, an welches sich diese Schulter somit anlegt.

5. Kurbel nach Anspruch 4, dadurch gekennzeichnet, daß eine Hohlkehle bzw. Vertiefung (17) an der Stelle einer jeden Schulter (16) eines Endstücks (2g oder 3g) vorgesehen ist, und zwar auf der an den Befestigungszapfen (4g oder 5g) dieses Endstücks angrenzenden Seite.

**Claims**

1. Bicycle pedal crank formed by the assembly of three separate elements, namely:
– a crank arm consisting of a tubular element (1),
– a first end-piece for example of metal forming the hub (2) of this pedal crank and fixed by fixing means on the corresponding end of the element (1) which forms the crank arm,
– and a second end-piece (3, 3a, 3b, 11, 11d, 11e) which is fixed on or within the opposite end of said tubular element (1) in order to serve as a receiving member for the spindle of the corresponding pedal, characterized in that the tubular element (1) is made of composite material by overmoulding of a synthetic resin on a tubular core of reinforcement fibres such as carbon fibres or aramide fibres, for 0, oris constituted by two complementary members (If) each fixed side by side, which are made of composite material constituted by fibres and an impregnation resin.

2. Pedal crank in accordance with claim 1, characterized in that the two end-pieces (2, 3 or 3a, 3b) each carry a tenon (4 or 5, 5a, 5b) adapted to be forcibly fitted within the corresponding end of the tubular element (1) and to be fixed therein by adhesive bonding or any other suitable means.

3. Pedal crank in accordance with claim 1, characterized in that the second end-piece which is intended to receive the spindle of the corresponding pedal consists of an insert (11, 11d) incorporated in the corresponding end of the tubular element (1) or of a plug (11e) which can be forcibly fitted within said end, said end-piece being provided with a transverse bore (12, 12e) having an external opening for receiving the pedal spindle.

4. Bicycle pedal crank in accordance with claims 1 and 2, characterized in that the ends (14, 15) of the crank arm (lg) extend obliquely with respect to the axis (Z-Z') of this latter and with respect to the base of the fixing tenon (4g, 5g) which is intended to be engaged within the tubular element (1), each end-piece (2g, 3g) being provided with a shoulder (16) which also extends obliquely with respect to the axis of said tenon at the same angle of slope (α) as the corresponding end of the tubular element (1) against which said shoulder is thus adapted to bear.

5. Pedal crank in accordance with claim 4, characterized in that a groove 17 is provided opposite to each shoulder (16) of an end-piece (2g or 3g) on the side adjacent to the fixing tenon (4g or 5g) of said end-piece.

Fig:1

Fig:2

Fig:4

Fig:3

**Fig. 5**

5b

3b

**Fig. 6**

5b

10

10

**Fig. 10**

1f

1f

X

**Fig. 7**

1c

11

12

**Fig. 8**

11d

1d

13

**Fig. 9**

1e

12 e

11e

Fig.11

Fig.12

Fig.13

**Fig. 14**

**Fig. 15**

**Fig. 16**